(19) Europäisches Patentamt
European Patent Office
Office européen des brevets

(11) **EP 2 495 860 B1**

(12) **FASCICULE DE BREVET EUROPEEN**

(45) Date de publication et mention
de la délivrance du brevet:
**20.02.2019 Bulletin 2019/08**

(51) Int Cl.:
*H02M 3/337* *(2006.01)*    *H02M 3/335* *(2006.01)*
*H02M 1/34* *(2007.01)*

(21) Numéro de dépôt: **12157859.5**

(22) Date de dépôt: **02.03.2012**

(54) **Structure de convertisseur d'énergie électrique à découpage**

Struktur eines Schalt-Stromumwandlers

Switch mode power converter structure

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.03.2011 FR 1151793**

(43) Date de publication de la demande:
**05.09.2012 Bulletin 2012/36**

(73) Titulaire: **Faiveley Transport Tours
37700 Saint Pierre des Corps (FR)**

(72) Inventeur: **Coyaud, Martin
37000 TOURS (FR)**

(74) Mandataire: **Santarelli
49, avenue des Champs-Elysées
75008 Paris (FR)**

(56) Documents cités:
**WO-A1-90/01232        WO-A1-2005/122399
WO-A1-2010/009760**

• TARDIFF D ET AL: "A summary of resonant
snubber circuits for transistors and GTOs", ISIE
1998, 1 octobre 1998 (1998-10-01), pages
1176-1180, XP010091002,
• NOME F J ET AL: "A ZVS clamping
mode-current-fed push-pull DC-DC converter",
INDUSTRIAL ELECTRONICS, 1998.
PROCEEDINGS. ISIE '98. IEEE INTERNATIONA L
SYMPOSIUM ON PRETORIA, SOUTH AFRICA
7-10 JULY 1998, NEW YORK, NY, USA,IEEE, US,
vol. 2, 7 juillet 1998 (1998-07-07), pages 617-621,
XP010296086, DOI: 10.1109/ISIE.1998.711684
ISBN: 978-0-7803-4756-4

**Description**

La présente invention concerne un convertisseur d'énergie électrique à découpage.

Le domaine d'application de l'invention est celui de la conversion d'énergie électrique. Elle s'adresse notamment aux convertisseurs de forte puissance, nécessitant un isolement galvanique. L'invention est relative aux convertisseurs d'énergie électrique à très haut rendement et vise particulièrement, mais non exclusivement, les tensions d'alimentation élevées.

Il est connu de l'état de la technique des convertisseurs de tensions continues de type *"push-pull"* mettant en oeuvre un transformateur. Dans un tel convertisseur, le primaire du transformateur est par exemple connecté d'une part en son point milieu à un conducteur d'entrée, via une inductance, d'autre part à ses deux extrémités à un second conducteur d'entrée. Deux interrupteurs commandés sont respectivement connectés sur l'une et l'autre des branches partant des extrémités du primaire et sont activés en alternance selon un rapport cyclique (en anglais *"duty cycle"*) adapté au taux de transfert voulu. Le secondaire dudit transformateur comprend typiquement un redresseur aux bornes duquel est connectée une capacité de filtrage. Une tension continue redressée est ainsi disponible en sortie.

Un mode de réalisation classique de convertisseurs à entrée en courant consiste en l'association d'un onduleur en demi-pont ou en pont complet, d'un transformateur d'isolement et d'un redresseur. Une structure de convertisseur de type *"push-pull"* en demi-pont est par exemple représentée dans le document *"Design procedure of a push-pull current fed DC-DC converter"* de Maiti, Mondai, Biswas (Dept. of Electrical Engineering, Jadavpur University, Kolkata, India, NPEC 2010).

Ces topologies offrent la possibilité d'utiliser un circuit d'aide à la commutation non-dissipatif, dit *"snubber",* placé parallèlement entre les bornes des moyens de commutation tels que des interrupteurs commandés.

Cependant, les convertisseurs à structure d'onduleur en demi-pont ou en pont complet exigent d'être alimentés par une source de tension afin de recycler l'énergie emmagasinée dans le circuit d'aide à la commutation, ce qui les rend moins intéressants dans le cas de sources d'alimentation instables ou polluées (présence de surtensions).

Ces structures présentent donc l'inconvénient de nécessiter une source de tension stable et d'amplitude du même ordre que le calibre des interrupteurs utilisés pour pouvoir mettre en oeuvre un circuit d'aide à la commutation, en pratique indispensable pour limiter les surtensions dues aux inductances parasites du transformateur et pour supporter les phases transitoires, notamment les phases de démarrage et d'arrêt du convertisseur.

D'autre part, le circuit d'aide à la commutation est inadapté à la mise en série d'étages primaires et donc inadapté aux applications haute tension.

On connait également un mode de réalisation de convertisseurs à entrée en tension dans le document WO 90/01232 A1.

La présente invention, telle que définie dans la revendication 1, a pour but de résoudre les inconvénients précités en proposant un convertisseur à très haut rendement, à entrée en courant.

A cet effet, l'invention concerne une structure de convertisseur d'énergie électrique à découpage à entrée en courant comportant un étage primaire et un étage secondaire, ledit étage primaire comprenant des premier et second enroulements primaires et des premier et second étages de conversion de type *push-pull* branchés respectivement en parallèle aux extrémités desdits premier et second enroulements primaires, lesdits premier et second étage de conversion comprenant chacun des premier et second interrupteurs commandés et des premier et second circuits d'aide à la commutation branchés respectivement en parallèle sur lesdits premier et second interrupteurs commandés, lesdits premier et second circuits d'aide à la commutation comprenant chacun un circuit de stockage et un circuit de recyclage.

Selon l'invention, les deux étages de conversion sont reliés à un potentiel commun fluctuant, le premier étage de conversion ayant son potentiel négatif relié au potentiel commun et le second étage de conversion ayant son potentiel positif relié au potentiel commun, et les premiers circuits d'aide à la commutation desdits premier et second étages de conversion sont connectés l'un à l'autre et les seconds circuits d'aide à la commutation desdits premier et second étages de conversion sont connectés l'un à l'autre.

Un tel montage permet de réaliser une structure de convertisseur compatible avec différentes sources de tension, d'amplitude variable. Cette structure est notamment adaptée à supporter les phases transitoires telles que les phases de démarrage et d'arrêt du convertisseur. Elle offre en outre l'avantage de pouvoir être utilisée en série au primaire pour fonctionner à des tensions d'alimentation élevées.

Selon un mode de réalisation pratique, chaque circuit de stockage comprend un condensateur *snubber* et une diode *snubber* et chaque circuit de recyclage comprend une inductance de recyclage et une diode de recyclage.

Selon une autre caractéristique avantageuse de l'invention, moyennant la commande simultanée des interrupteurs commandés des premiers circuits d'aide à la commutation d'une part et des seconds circuits d'aide à la commutation d'autre part, les premier et second enroulements primaires sont couplés et l'étage secondaire comprend un unique enroulement secondaire et un redresseur branché sur l'unique enroulement secondaire, lesdits premier et second enroulements primaires et l'unique enroulement secondaire étant couplés sur un même noyau.

Selon ce mode avantageux de l'invention, les inductances de recyclage des premiers circuits d'aide à la commutation des premier et second étages de conversion sont couplées et les inductances de recyclage des seconds circuits d'aide à la commutation des premier et second étages de conversion sont couplées.

De tels couplages permettent une économie de composants.

D'autres particularités et avantages de l'invention apparaîtront encore dans la description ci-après.

Dans les dessins annexés, donnés à titre d'exemples non limitatifs :

- la Figure 1 représente un mode de réalisation d'un convertisseur de courant conforme à l'invention ; et
- les Figures 2a à 2d représentent l'évolution des tensions et courants en cycle établi dans une partie de la structure de convertisseur de courant illustrée à la Figure 1 ; et
- la Figure 3 représente une variante du convertisseur de la Figure 1 dans lequel les secondaires ont été reliés en série ; et
- la Figure 4 représente une variante de l'invention dans laquelle la structure de convertisseur représentée à la Figure 1 a été connectée à une seconde structure de convertisseur identique, en série au primaire et en parallèle au secondaire.

L'invention se rapporte à une structure de convertisseur d'énergie électrique isolé à entrée en courant, comportant au moins un étage primaire onduleur et au moins un étage secondaire redresseur.

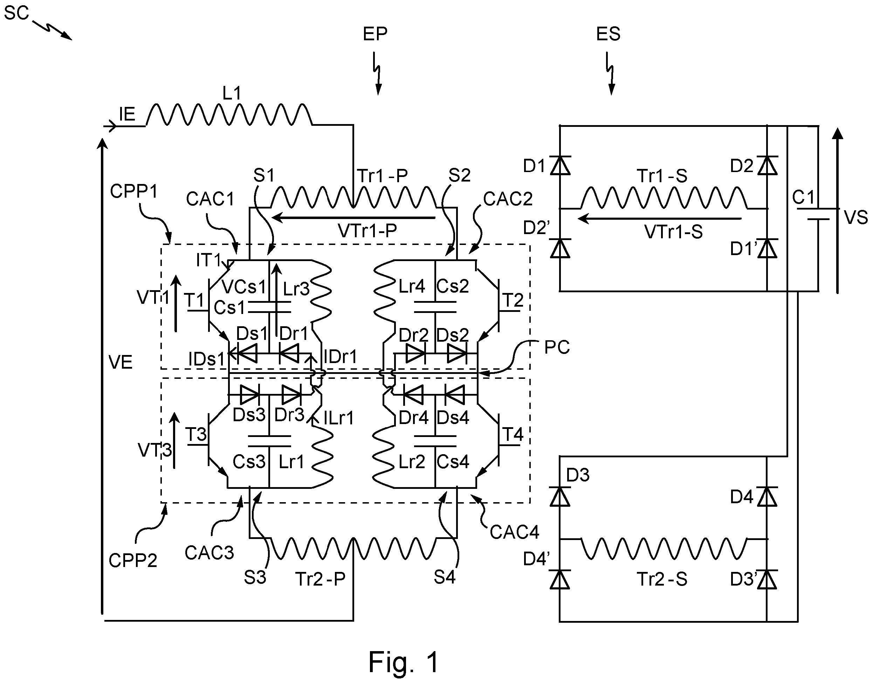

Dans un premier mode de réalisation, représenté Figure 1, la structure de convertisseur SC comporte un étage primaire EP, connecté à l'entrée en courant (IE, VE), appelé étage primaire, et un étage secondaire ES en sortie duquel on récupère la tension voulue VS.

L'étage primaire comporte deux enroulements primaires Tr1-P, Tr2-P connectés chacun à l'entrée en courant en leur point milieu et comportant chacun un étage de conversion à commande symétrique appelé étage de conversion *push-pull* CPP1 et CPP 2 branché à ses extrémités.

Le premier étage de conversion *push-pull* CPP1 comporte un premier interrupteur commandé T1 connecté en série par une première borne à une première extrémité de l'enroulement primaire Tr1-P et un second interrupteur commandé T2 connecté en série par une première borne à l'extrémité dudit enroulement primaire Tr1-P opposée à la première.

De même, le second étage de conversion *push-pull* CPP2 comporte un premier interrupteur commandé T3 connecté en série par une première borne à une première extrémité de l'enroulement primaire Tr2-P et un second interrupteur commandé T4 connecté en série par une première borne à l'extrémité dudit enroulement primaire Tr2-P opposée à la première.

Ici, les interrupteurs commandés T1 - T4 sont des transistors bipolaires NPN (en anglais : *NPN bipolar junction transistor*).

Les interrupteurs commandés T1 - T4 peuvent être de manière générale des interrupteurs unidirectionnels ou bidirectionnels, tels que des thyristors GTO, des thyristors IGCT, des triacs, des transistors de type FET, bipolaires, IGBT, MOSFET ou similaires, ou des associations de ces interrupteurs.

Les interrupteurs commandés T1 - T4 sont connectés entre eux à un potentiel commun fluctuant PC par leur borne opposée aux enroulements primaires Tr1-P, Tr2-P sur lesquels ils sont branchés. Ainsi, les deux ensembles composés chacun d'un des deux enroulements primaires Tr1-P, Tr2-P et de son étage de conversion propre CPP1, CPP2 sont connectés tête-bêche au potentiel commun fluctuant PC de sorte que le potentiel positif du second ensemble Tr2-P, CPP2 soit le potentiel négatif du premier ensemble Tr1-P, CPP1.

Aux bornes de chaque interrupteur commandé T1 - T4 est connecté un circuit d'aide à la commutation CAC1 - CAC4 correspondant, de structure semblable à ceux décrits dans la demande de brevet de la demanderesse FR2870057A1, et comportant chacun un circuit de stockage et un circuit de recyclage.

Pour simplifier la description, on parlera d'un premier bras pour les interrupteurs commandés T1 et T3 et les circuits d'aide à la commutation correspondants CAC1 et CAC3. De même, le second bras désignera les interrupteurs commandés T2 et T4 et les circuits d'aide à la commutation correspondants CAC2 et CAC4.

Les circuits de stockage comprennent chacun un condensateur de protection contre les surtensions, appelée condensateur *snubber* Cs1 - Cs4, et une diode de protection associée, appelée diode *snubber* Ds1 - Ds4, connectée en série au condensateur *snubber* correspondant. Chaque circuit de stockage est connecté en parallèle à l'interrupteur commandé correspondant T1 - T4, le condensateur étant positionné du côté de l'enroulement primaire approprié Tr1-P, Tr2-P.

Chaque circuit de recyclage comprend une inductance de recyclage Lr1 - Lr4 et une diode de recyclage Dr1 - Dr4.

Le circuit de recyclage Lr1, Dr1 du premier circuit d'aide à la commutation CAC1 du premier étage de conversion CPP1 est branché entre les potentiels négatifs des condensateurs *snubbers* Cs1, Cs3 du premier bras. Le circuit de recyclage Lr3, Dr3 du premier circuit d'aide à la commutation CAC3 du second étage de conversion CPP2 est branché entre les potentiels positifs des condensateurs *snubbers* Cs1, Cs3 du premier bras.

De même, le circuit de recyclage Lr2, Dr2 du second circuit d'aide à la commutation CAC2 du premier étage de conversion CPP1 est branché entre les potentiels négatifs des condensateurs *snubbers* Cs2, Cs4 du second bras. Le circuit de recyclage Lr4, Dr4 du second circuit d'aide à la commutation CAC4 du second étage de conversion CPP2 est branché entre les potentiels positifs des condensateurs *snubbers* Cs2, Cs4 du second bras.

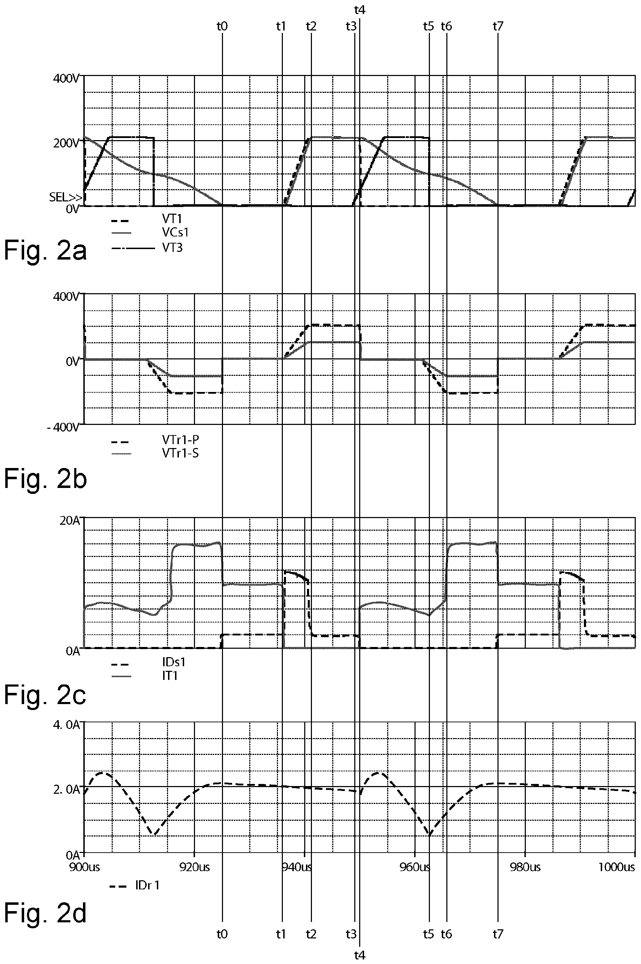

Ainsi qu'il sera expliqué à l'aide des courbes des Figures 2a - 2d, l'énergie emmagasinée dans les circuits de stockage S1 - S4 des circuits d'aide à la commutation lors de l'ouverture des interrupteurs commandés T1 - T4 est déchargée dans l'autre partie du bras via les inductances de recyclage Lr1 - Lr4 des circuits de recyclage correspondants.

Dans le premier étage de conversion CPP1, les diodes *snubber* Ds1 et Ds2 ainsi que les diodes de recyclage Dr1, Dr2 sont orientées de façon à être passantes depuis les inductances de recyclage respectives correspondantes Lr1, Lr2 vers le potentiel commun fluctuant PC. A l'inverse, dans le second étage de conversion CPP2, les diodes *snubber* Ds3, Ds4 ainsi que les diodes de recyclage Dr3, Dr4 sont orientées de façon à être passantes depuis le potentiel commun fluctuant PC vers les inductances de recyclage respectives correspondantes Lr3, Lr4.

Dans le mode de réalisation représenté Figure 1, l'étage secondaire ES comporte deux enroulements secondaires Tr1-S, Tr2-S. Aux bornes de chaque enroulement secondaire est connecté un redresseur. Le premier enroulement secondaire Tr1-S est connecté à un redresseur constitué d'un premier pont de diodes D1, D2, D2', D1', le second enroulement secondaire Tr2-S est connecté à un redresseur constitué d'un second pont de diodes D3, D4, D4', D3'.

Les ensembles ainsi formés, comprenant chacun un enroulement secondaire et son pont de diode associé, sont branchés en parallèle sur un dispositif de stockage et de filtrage de sortie, ici un condensateur C1, aux bornes duquel on récupère la tension de sortie VS de la structure de convertisseur SC.

Par ailleurs, le montage présente en entrée un dispositif de filtrage de courant de type inductance L1, destiné à diminuer les ondulations de courant générées par le découpage.

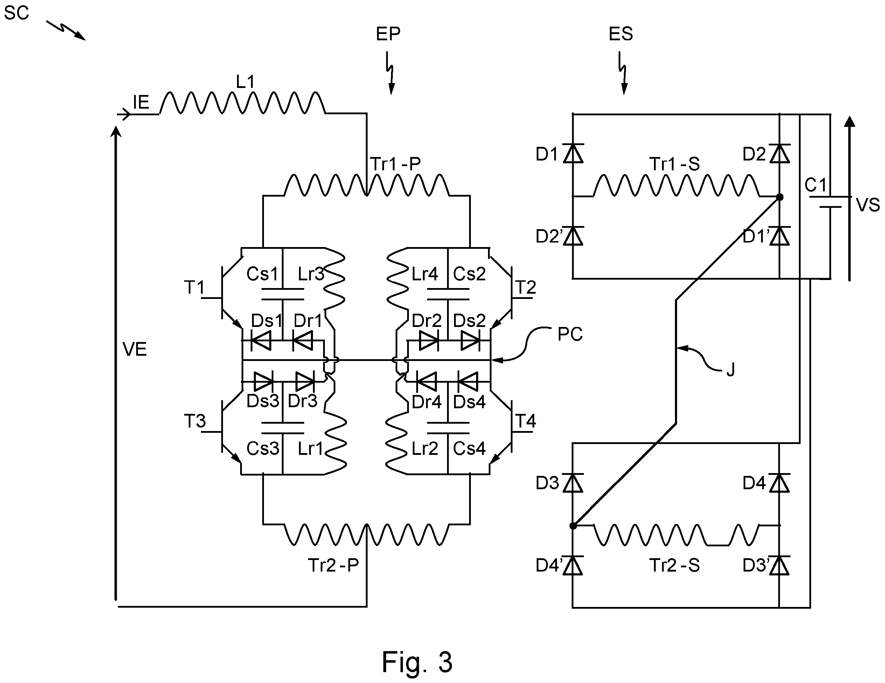

Un second mode de réalisation, représenté Figure 3, reprend la structure du premier mode de réalisation où les premier et second enroulements secondaires sont reliés en série par un conducteur J.

Dans cette seconde configuration, il est possible de jouer sur le déphasage des commandes des interrupteurs commandés T1, T2 du premier étage de conversion CPP1 par rapport aux interrupteurs commandés T3, T4 du second étage de conversion CPP2. Cette configuration augmente sensiblement l'excursion possible du rapport des tensions d'entrée et de sortie VS/VE.

On décrit ci-après le fonctionnement de la structure de convertisseur SC en fonction de la loi de commande des interrupteurs.

Dans un premier temps on ne tient pas compte des étages de circuit d'aide à la commutation. Dans cette réalisation, la topologie s'apparente alors à deux convertisseurs *push-pull*, à entrée en courant, disposés en série. Le convertisseur étant à entrée en courant, on peut considérer en première approche que la commande des interrupteurs est telle que les interrupteurs commandés T1, T2 du premier étage de conversion CPP1 ne sont pas ouverts simultanément et que les interrupteurs commandés T3, T4 du second étage de conversion CPP2 ne sont pas ouverts simultanément.

Dans le cas d'un seul interrupteur commandé fermé parmi les interrupteurs commandés T1, T2 du premier étage de conversion CPP1 (respectivement parmi les interrupteurs commandés T3, T4 du second étage de conversion CPP2), la tension aux bornes de l'interrupteur ouvert est la tension aux bornes de l'enroulement primaire Tr1-P (respectivement de l'enroulement secondaire Tr2-P). Cette tension est égale, au rapport d'enroulement m près, à la moitié de la tension aux bornes de l'enroulement secondaire Tr1-S (respectivement de l'enroulement secondaire Tr2-S), soit après redressement la tension m×VS/2. Une tension totale m×VS s'applique alors à l'étage primaire. De même, le courant traversant l'interrupteur fermé parmi les interrupteurs commandés T1, T2 du premier étage de conversion CPP1 (respectivement T3, T4 du second étage de conversion) vaut IE.

Dans le cas des deux interrupteurs commandés fermés T1, T2 au premier étage de conversion CPP1 (respectivement T3, T4 au second étage de conversion CPP2), la tension aux bornes de l'enroulement primaire Tr1-P (respectivement de l'enroulement secondaire Tr2-P) est ramenée à zéro. Dans ce cas, il n'y a pas de transfert d'énergie de l'étage primaire EP vers l'étage secondaire ES. L'étage primaire EP présente une tension nulle et le courant IE est alors partagé entre les deux interrupteurs commandés de chaque étage.

Si on définit α comme le rapport cyclique de fermeture des interrupteurs commandés (50% <α< 100%) et si les interrupteurs commandés T1, T2 du premier étage de conversion CPP1 (respectivement T3, T4 du second étage de conversion CPP2) sont en opposition de phase, on peut faire varier la tension présentée par l'étage primaire EP par le choix de α:

$$V_{étage} = (2 - 2×\alpha)×m×VS.$$

Les circuits d'aide à la commutation CAC1 - CAC4 permettent un fonctionnement plus large de la structure de convertisseur, en autorisant les interrupteurs commandés T1, T2 (respectivement T3, T4) d'un même étage de conversion CPP1 (respectivement CPP2) à être ouverts simultanément, c'est à dire à avoir un rapport cyclique α inférieur à 50%. Cette phase de fonctionnement est intéressante lorsque la tension d'entrée est supérieure à la tension de sortie multipliée par le rapport m (VE > m×VS), c'est à dire notamment quand le convertisseur démarre et que la tension de sortie VS est nulle ou insuffisante, ou que d'une façon générale la tension d'entrée VE est supérieure à m×VS.

Ce mode de fonctionnement capital est réservé à des courants d'entrée IE faibles car les condensateurs *snubber* Cs1 - Cs4 sont de faible valeur.

D'autre part, l'utilisation de ces étages de circuit d'aide à la commutation CAC1 - CAC4 permet classiquement de diminuer les pertes à l'ouverture des interrupteurs commandés T1 - T4 en déviant le courant dans le condensateur correspondant Cs1 - Cs4 et de limiter la surtension générée à l'ouverture des interrupteurs T1 - T4. Cette surtension est due à l'inductance de fuite des enroulements primaires Tr1-P, Tr2-P qui ne peut être annulée et qui participe à limiter les pertes à la fermeture des interrupteurs T1 - T4 en ralentissant la montée du courant pendant la commutation. Les circuits d'aide à la commutation CAC1 - CAC4 permettent de diminuer les perturbations générées par la structure de convertisseur en ralentissant les fronts des formes d'onde lors des commutations.

Les courbes représentées aux Figures 2a - 2d montrent, en cycle établi, l'évolution des tensions et courants dans le premier bras du mode de réalisation représenté à la Figure 1. Ces courbes correspondent aux paramètres de fonctionnement suivants, à titre d'exemples non limitatifs :

- la fréquence de découpage des interrupteurs commandés T1 - T4 est égale à 20kHz,
- le rapport d'enroulement m entre le premier enroulement primaire et le premier enroulement secondaire est égal à 2 (ce qui correspond à Tr1-P/Tr1-S=2/1),
- la tension d'entrée VE est égale à 100V, la tension de sortie VS est égale à 100V et le courant d'entrée IE est égal à 10A,
- la capacité des condensateurs Cs1 - Cs4 est de 200nF, la valeur des inductances de recyclage Lr1 - Lr4 est de 400μH,
- le rapport cyclique $\alpha$ des transistors T1 - T4 est fixé à 72%
- le déphasage des interrupteurs commandés T1 - T4 est égal aux valeurs suivantes : $\varphi$T1=0°, $\varphi$T2=180°, $\varphi$T3=90°, $\varphi$T4=270°.

Le fonctionnement du système est divisé en 7 phases représentant au total une période de découpage s'étendant dans cet exemple de l'instant t0=925μs à l'instant t7=975μs :

Phase 1 : t0=925μs à t1=936ps

L'interrupteur commandé T1 est fermé. La tension VT1 à ses bornes est alors nulle et le courant IT1 qui le parcourt prend la valeur IE.
L'inductance de recyclage Lr1 restitue de l'énergie. La diode *snubber* Ds1 et la diode de recyclage Dr1 sont parcourues par des courants IDs1 et IDr1 égaux à 2A.
L'interrupteur commandé T3 étant fermé, le courant circule en permanence dans l'inductance de recyclage Lr1.
En conséquence, les tensions aux bornes de la diode *snubber* Ds1 et du condensateur Cs1 sont nulles ; le condensateur *snubber* Cs1 est déchargé.
L'interrupteur commandé T2 étant fermé, le premier enroulement primaire Tr1-P est en court-circuit et la tension VTr1-P à ses bornes est nulle d'où une tension VTr1-S nulle aussi aux bornes de l'enroulement secondaire Tr1-S.

Phase 2 : t1=936μs à t2=941μs

L'interrupteur commandé T1 est ouvert à l'instant t1=936μs. A partir de cet instant, le courant IT1 traversant T1 prend une valeur nulle.
Le courant qui traversait initialement l'interrupteur commandé T1 est dérivé dans le circuit de stockage Cs1, Ds1. On observe la charge du condensateur *snubber* Cs1 jusqu'à l'instant t2=941μs.
La tension aux bornes du premier enroulement primaire Tr1-P, et par conséquent aux bornes du premier enroulement secondaire Tr1-S, augmente progressivement.
La diode de recyclage Dr1 et l'inductance de recyclage Lr1 continuent à faire circuler un courant IDr1=2A.
L'interrupteur commandé T2 étant fermé, la tension aux bornes du condensateur *snubber* Cs1 arrête de croître à l'instant t2=941μs lorsque la tension aux bornes du premier enroulement secondaire Tr1-S atteint la tension de sortie Vs. A cet instant en effet, les diodes du redresseur D1 et D'1 sont mises en conduction et la tension aux bornes de l'enroulement primaire Tr1-P arrête de croître par l'effet du couplage du premier enroulement primaire Tr1-P et du premier enroulement secondaire Tr1-S.
Le courant dans la diode *snubber* Ds1 retombe alors à la valeur précédente de roue-libre de l'inductance de recyclage Lr1, soit IDs1=2A.

Phase 3 : t2=941μs à t3=948μs

Le condensateur *snubber* Cs1 est chargé, l'interrupteur commandé T1 est ouvert, les interrupteurs commandés T2, T3 sont fermés. Le courant du circuit d'aide à la commutation circule en permanence dans les diodes Ds1, Dr1 et l'inductance de recyclage Lr1.

Phase 4 : t3=948μs à t4=950μs

L'interrupteur commandé T3 est ouvert suivant le même scénario que l'interrupteur commandé T1 à la phase 2.
Le courant de roue-libre traversant les diodes Ds1, Dr1 et l'inductance de recyclage Lr1 commence à décroître car la tension VT3 aux bornes de l'interrupteur commandé T3 augmente sous l'effet du recyclage de l'énergie de Lr1. Cette énergie est transférée dans le condensateur *snubber* Cs3.

Phase 5 : t4=950μs à t5=963μs

L'interrupteur commandé T1 est fermé à l'ins-

tant t4=950μs

La charge du condensateur *snubber* Cs1 bloque immédiatement la diode *snubber* Ds1 (La tension VCs1 aux bornes du condensateur *snubber* Cs1 valant 210V environ). Le courant croît dans le circuit de recyclage Dr1, Lr1 : c'est la phase de recyclage de l'énergie du condensateur *snubber* Cs1. La tension VCs1 aux bornes du condensateur *snubber* Cs1 diminue.

Lorsque la tension montante aux bornes de l'interrupteur commandé T3 égale la tension descendante aux bornes du condensateur *snubber* Cs1 (à l'instant t5=953μs), le courant IDr1 issu de la décharge du condensateur *snubber* Cs1 atteint son maximum et commence à décroître.

A partir de cet instant, le circuit d'aide à la commutation CAC 1 effectue un transfert d'énergie résonnant depuis l'inductance de recyclage Lr1 et le condensateur *snubber* Cs1, vers le second enroulement primaire Tr2-P. L'énergie du circuit d'aide à la commutation est ainsi transférée à l'enroulement secondaire, sans perte autre que celles des composants semi-conducteurs et réactifs.

Pendant ce temps l'interrupteur commandé T1 reste fermé et est traversé par un courant égal à (1/2xIE + IDr1).

Phase 6 : t5=963μs à t6=966μs

L'interrupteur commandé T2 s'ouvre suivant le même scénario que pour l'interrupteur commandé T1 à la phase 2.

L'interrupteur commandé T3 se ferme et la tension VT3 aux bornes de l'interrupteur T3, et qui permettait la décharge du condensateur *snubber* Cs1 dans le second enroulement primaire Tr2-P au travers du circuit de recyclage Dr1, Lr1, s'annule. Les interrupteurs T1, T3 étant fermés, le circuit constitué du condensateur *snubber* Cs1 et du circuit de recyclage Dr1, Lr1 forme une boucle fermée et la tension restante aux bornes du condensateur *snubber* Cs1 se transfère à l'inductance de recyclage Lr1.

A l'instant t6=966ps, l'ouverture de l'interrupteur commandé T2 est finie et le courant d'entrée IE passe intégralement dans l'interrupteur commandé T1 fermé.

Phase 7 : t6=966ps à t7=975μs

L'interrupteur commandé T1 est parcouru par le courant d'entrée IE, additionné du courant des inductances de recyclage Lr3, Lr4 et de la fin de la décharge du condensateur *snubber* Cs1.

Le courant dans l'inductance de recyclage Lr1 continue de croître suivant une arche de sinusoïde. Lorsque le condensateur *snubber* Cs1 est complètement déchargé, la diode *snubber* Ds1 se met en conduction et l'énergie stockée dans l'inductance de recyclage Lr1 peut circuler en permanence à travers les diodes Ds1, Dr1 et l'interrupteur commandé T3.

L'interrupteur commandé T2 étant ouvert, la tension aux bornes de la moitié du premier enroulement primaire Tr1-P située du côté du premier bras est égale à la tension aux bornes du premier enroulement secondaire Tr1-S par couplage.

Le système est alors prêt pour le cycle suivant.

De nombreuses variantes peuvent être mises en oeuvre aussi bien à l'étage primaire EP qu'à l'étage secondaire ES de la structure de convertisseur.

Dans une variante de réalisation, les enroulements primaires Tr1-P et Tr2-P sont couplés sur un même noyau. Il est ainsi possible de n'utiliser qu'un unique enroulement secondaire commun en supprimant ainsi le pont redresseur composé de D3, D4, D4', D3'. Cette suppression permet avantageusement de commander simultanément les premiers interrupteurs commandés T1, T3 d'une part et les seconds interrupteurs commandés T2, T4 d'autre part et donc de réduire le nombre de commandes de la structure de convertisseur.

Lorsque les enroulements primaires Tr1-P, Tr2-P sont couplés, il est encore possible de coupler les inductances de recyclage Lr1, Lr3 du premier étage de conversion CPP1 d'une part, et de coupler les inductances de recyclage Lr2, Lr4 du second étage de conversion CPP2 d'autre part, celles-ci étant traversées par des formes d'ondes identiques.

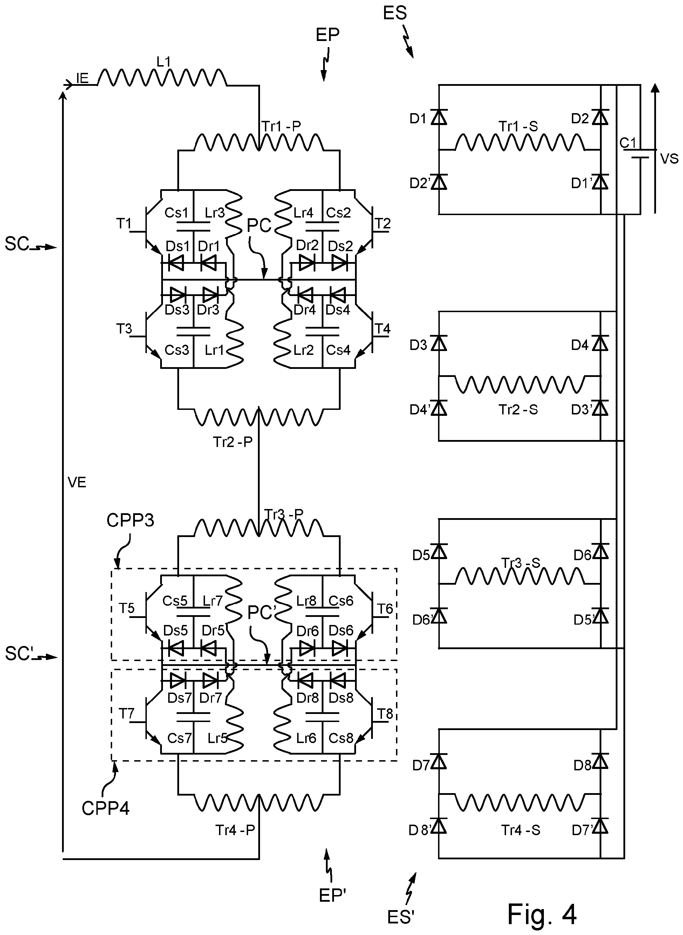

Une variante avantageuse du convertisseur proposé consiste à connecter plusieurs étages primaires en série et plusieurs étages secondaires en parallèle sur plusieurs noyaux de transformateurs indépendants. Un tel exemple de réalisation est proposé Figure 4 dans lequel la structure de convertisseur SC représentée à la Figure 1 est connectée à une seconde structure de convertisseur SC' identique, leurs étages primaires respectifs EP et EP' étant connectés en série et leurs étages secondaires respectifs ES et ES' étant connectés en parallèle sur la même capacité de sortie C1. Ici, la seconde structure de convertisseur SC' comprend deux enroulements primaires Tr3-P, Tr4-P et deux étages de conversion CPP3, CPP4 identiques à ceux de la structure de convertisseur SC représentée à la Figure 1. La mise en série des étages primaires EP, EP' est effectuée par la connexion du potentiel négatif de la première structure de convertisseur SC au potentiel positif de la seconde structure de convertisseur SC'. Le potentiel négatif de la première structure de convertisseur SC est le point milieu de l'enroulement primaire Tr2-P. Le potentiel positif de la seconde structure de convertisseur SC' est le point milieu de l'enroulement primaire Tr3-P.

Les commandes des étages primaires en série peuvent alors être indépendantes, synchronisées ou encore synchronisées et décalées les unes par rapport aux autres. Dans le cas de commandes indépendantes, la commutation des interrupteurs des différents étages primaires peut ainsi se faire à fréquences différentes. Ainsi, une des structures de convertisseur peut servir de dispositif de filtrage d'entrée si l'actionnement des interrupteurs commandés de son étage primaire se fait à haute fréquence. *A contrario,* des commandes synchronisées et décalées peuvent permettre de diminuer les ondulations du courant d'entrée et de la tension de sortie. Dans un tel mode de réalisation et avec des interrupteurs de calibre 600V par exemple, chaque étage primaire EP, EP',... peut supporter une tension unitaire de 400V environ. La mise en série du nombre convenable d'étages primaires permet d'utiliser une quelconque haute tension d'entrée VE.

Une variante du convertisseur proposé consiste à brancher des demi-ponts redresseurs sur les enroulements secondaires Tr1-S, Tr2-S en lieu et place des ponts complets, l'autre bras étant constitué de condensateurs afin de réaliser un point milieu. Dans cette mise en oeuvre, la topologie de la Figure 1 comporterait par exemple quatre condensateurs en lieu et place des diodes D1, D2', D3 et D4'. Cette réalisation permet simultanément de simplifier le redresseur, de réaliser la fonction de filtrage de sortie initialement réalisée par C1 et de créer un point milieu scindant la tension VS en deux tensions égales.

Une variante particulièrement intéressante dans le cas de basses tensions de sortie consiste à substituer des interrupteurs à faible chute de tension (MOSFET par exemple) aux diodes du redresseur, afin de réaliser un redressement synchronisé avec les interrupteurs T1 - T4 de l'étage primaire. Une telle substitution permet la réversibilité en courant de la structure du convertisseur et la diminution des pertes en conduction de la fonction redresseur ainsi réalisée par redressement synchrone.

Une variante avantageuse du convertisseur consiste à multiplier les étages secondaires des transformateurs utilisés et leur redresseur associé, dans le but par exemple de réaliser des alimentations à plusieurs sorties isolées, nonobstant le maintien d'au moins un enroulement et son redresseur débitant sur une sortie commune à tous les transformateurs afin d'équilibrer naturellement les tensions des étages primaires. On peut alors réaliser des convertisseurs multivoies, fournissant par exemple sur un premier étage secondaire une tension de sortie de 700V continue destinée à alimenter un onduleur triphasé, et sur un étage secondaire supplémentaire indépendant une faible tension de sortie (12V, 24V, 48V par exemple) destinée à alimenter un chargeur de batterie.

**Revendications**

1. Structure de convertisseur d'énergie électrique à découpage à entrée en courant comportant un dispositif de filtrage de courant de type inductance (L1), ladite structure comportant un étage primaire (EP) et un étage secondaire (ES), ledit étage primaire (EP) comprenant des premier et second enroulements primaires (Tr1-P, Tr2-P) et des premier et second étages de conversion de type *push-pull* (CPP1, CPP2) branchés respectivement en parallèle aux extrémités desdits premier et second enroulements primaires (Tr1-P, Tr2-P), lesdits premier et second étages de conversion (CPP1, CPP2) comprenant chacun des premier et second interrupteurs commandés (T1, T2 ; T3, T4) et des premier et second circuits d'aide à la commutation (CAC1, CAC2 ; CAC3, CAC4) branchés respectivement en parallèle sur lesdits premier et second interrupteurs commandés (T1, T2 ; T3, T4), lesdits premier et second circuits d'aide à la commutation (CAC1, CAC2 ; CAC3, CAC4) comprenant chacun un circuit de stockage (S1, S2 ; S3, S4) et un circuit de recyclage, **caractérisée en ce que** chaque circuit de stockage (S1, S2, S3, S4) comprend un condensateur *snubber* (Cs1, Cs2, Cs3, Cs4) et une diode *snubber* (Ds1, Ds2, Ds3, Ds4), **en ce que** les deux étages de conversion sont reliés à un potentiel commun fluctuant (PCF), le premier étage de conversion ayant son potentiel négatif relié au potentiel commun (PCF) et le second étage de conversion ayant son potentiel positif relié au potentiel commun (PCF), et **en ce que** les premiers circuits d'aide à la commutation (CAC1, CAC3) desdits premier et second étages de conversion (CPP1, CPP2) sont connectés l'un à l'autre et les seconds circuits d'aide à la commutation (CAC2, CAC4) desdits premier et second étages de conversion (CPP1, CPP2) sont connectés l'un à l'autre.

2. Structure de convertisseur selon la revendication 1, **caractérisée en ce que** chaque circuit de recyclage comprend une inductance de recyclage (Lr1, Lr2, Lr3, Lr4) et une diode de recyclage (Dr1, Dr2, Dr3, Dr4) ;

3. Structure de convertisseur selon l'une des revendications 1 ou 2, **caractérisée en ce que** lesdits premier et second enroulements primaires (Tr1-P, Tr2-P) sont couplés et **en ce que** l'étage secondaire (ES) comprend un unique enroulement secondaire et un redresseur branché sur ledit unique enroulement secondaire, lesdits premier et second enroulements primaires et l'unique enroulement secondaire étant couplés sur un même noyau.

4. Structure de convertisseur selon la revendication 3, **caractérisée en ce que** les premiers circuits d'aide à la commutation (CAC1, CAC3) des premier et second étages de conversion comprennent des inductances de recyclage (Lr1, Lr3) couplées entre elles, et **en ce que** les seconds circuits d'aide à la commutation (CAC2, CAC4) des premier et second étages de conversion comprennent des inductances de recyclage (Lr2, Lr4) couplées entre elles.

5. Structure de convertisseur selon l'une des revendications 1 à 2, **caractérisée en ce que** l'étage secondaire (ES) comporte des premier et second enroulements secondaires (Tr1-S, Tr2-S) et des premier et second redresseurs (D1, D2, D2', D1' ; D3, D4, D4', D3') branchés respectivement sur lesdits premier et second enroulements secondaires (Tr1-S ; Tr2-S).

**6.** Structure de convertisseur selon la revendication 5, **caractérisée en ce que** lesdits premier et second enroulements secondaires (Tr1-S, Tr2-S) sont connectés en série.

**7.** Structure de convertisseur selon l'une des revendications 1 à 6, **caractérisée en ce qu'**il comprend plusieurs étages primaires connectés en série, plusieurs étages secondaires étant connectés en parallèle sur un même dispositif de sortie.

**8.** Structure de convertisseur selon la revendication 7, **caractérisée en ce que** les commandes desdits étages primaires connectés en série sont indépendantes.

**9.** Structure de convertisseur selon la revendication 7, **caractérisée en ce que** les commandes desdits étages primaires connectés en série sont synchronisées et décalées.

**Patentansprüche**

**1.** Stromwandlerstruktur mit Umschaltung am Stromeingang, umfassend eine Stromfiltervorrichtung vom Induktivitäts-Typ (L1), wobei die Struktur eine Primärstufe (EP) und eine Sekundärstufe (ES) aufweist, wobei die Primärstufe (EP) eine erste und eine zweite Primärwicklung (Tr1-P, Tr2-P) und eine erste und eine zweite Wandlerstufe vom Typ *push-pull* (CPP1, CPP2) umfasst, die jeweils parallel an den Enden der ersten und der zweiten Primärwicklung (Tr1-P, Tr2-P) angeschlossen sind, wobei die erste und die zweite Wandlerstufe (CPP1, CPP2) jeweils einen ersten bzw. einen zweiten steuerbaren Schalter (T1, T2; T3, T4) und eine erste bzw. eine zweite Schalthilfsschaltung (CAC1, CAC2; CAC3, CAC4) aufweisen, die jeweils parallel an den ersten bzw. zweiten steuerbaren Schalter (T1, T2; T3, T4) angeschlossen sind, wobei die erste und die zweite Schalthilfsschaltung (CAC1, CAC2; CAC3, CAC4) jeweils eine Speicherschaltung (S1, S2; S3, S4) und eine Rückführschaltung umfassen, **dadurch gekennzeichnet, dass** jede Speicherschaltung (S1, S2, S3, S4) einen *Snubber*-Kondensator (Cs1, Cs2, Cs3, Cs4) und eine *Snubber*-Diode (Ds1, Ds2, Ds3, Ds4) umfasst, dass die beiden Wandlerstufen mit einem schwankenden gemeinsamen Potential (PCF) verbunden sind, wobei die erste Wandlerstufe an ihrem negativen Potential mit dem gemeinsamen Potential (PCF) verbunden ist und die zweite Wandlerstufe an ihrem positiven Potential mit dem gemeinsamen Potential (PCF) verbunden ist, und dass die ersten Schalthilfsschaltungen (CAC1, CAC3) der ersten und der zweiten Wandlerstufe (CPP1, CPP2) miteinander verschaltet sind und die zweiten Schalthilfsschaltungen (CAC2, CAC4) der ersten und der zweiten Wandlerstufe (CPP1, CPP2) miteinander verschaltet sind.

**2.** Wandlerstruktur nach Anspruch 1, **dadurch gekennzeichnet, dass** jede Rückführschaltung eine Rückführinduktivität (Lr1, Lr2, Lr3, Lr4) und eine Rückführdiode (Dr1, Dr2, Dr3, Dr4) umfasst.

**3.** Wandlerstruktur nach einem der Ansprüche 1 oder 2, **dadurch gekennzeichnet, dass** die erste und die zweite Primärwicklung (Tr1-P, Tr2-P) gekoppelt sind und dass die Sekundärstufe (ES) eine einzelne Sekundärwicklung und einen Gleichrichter aufweist, der an die einzelne Sekundärwicklung angeschlossen ist, wobei die erste und die zweite Primärwicklung und die einzelne Sekundärwicklung an einen gleichen Kern gekoppelt sind.

**4.** Wandlerstruktur nach Anspruch 3, **dadurch gekennzeichnet, dass** die ersten Schalthilfsschaltungen (CAC1, CAC3) der ersten und der zweiten Wandlerstufe miteinander gekoppelte Rückführinduktivitäten (Lr1, Lr3) umfassen, und dass die zweiten Schalthilfsschaltungen (CAC2, CAC4) der ersten und der zweiten Wandlerstufe miteinander gekoppelte Rückführinduktivitäten (Lr2, Lr4) aufweisen.

**5.** Wandlerstruktur nach einem der Ansprüche 1 bis 2, **dadurch gekennzeichnet, dass** die Sekundärstufe (ES) eine erste und eine zweite Sekundärwicklung (Tr1-S, Tr2-S) und einen ersten und einen zweiten Gleichrichter (D1, D2, D2', D1'; D3, D4, D4', D3') umfasst, die jeweils an die erste bzw. zweite Sekundärwicklung (Tr1-S; Tr2-S) angeschlossen sind.

**6.** Wandlerstruktur nach Anspruch 5, **dadurch gekennzeichnet, dass** die erste und die zweite Sekundärwicklung (Tr1-S, Tr2-S) in Reihe geschaltet sind.

**7.** Wandlerstruktur nach einem der Ansprüche 1 bis 6, **dadurch gekennzeichnet, dass** sie mehrere in Reihe geschaltete Primärstufen aufweist, wobei mehrere Sekundärstufen an einer gleichen Ausgangseinrichtung parallel geschaltet sind.

**8.** Wandlerstruktur nach Anspruch 7, **dadurch gekennzeichnet, dass** die Steuerungen der in Reihe geschalteten Primärstufen unabhängig sind.

**9.** Wandlerstruktur nach Anspruch 7, **dadurch gekennzeichnet, dass** die Steuerungen der in Reihe geschalteten Primärstufen synchronisiert und versetzt sind.

**Claims**

1. Switch-mode power converter structure having a current input and comprising an inductor-type current filtering device (L1), said structure comprising a primary stage (EP) and a secondary stage (ES), said primary stage (EP) including first and second primary windings (Tr1-P, Tr2-P) and first and second push-pull-type conversion stages (CPP1, CPP2) connected in parallel with the ends of said first and second primary windings (Tr1-P, Tr2-P), respectively, said first and second conversion stages (CPP1, CPP2) each including first and second controlled switches (T1, T2; T3, T4) and first and second auxiliary switching circuits (CAC1, CAC2; CAC3, CAC4) connected in parallel to said first and second controlled switches (T1, T2; T3, T4), respectively, said first and second auxiliary switching circuits (CAC1, CAC2; CAC3, CAC4) each including a storage circuit (S1, S2; S3, S4) and a recirculation circuit, **characterised in that** each storage circuit (S1, S2, S3, S4) includes a snubber capacitor (Cs1, Cs2, Cs3, Cs4) and a snubber diode (Ds1, Ds2, Ds3, Ds4), **in that** the two conversion stages are linked to a fluctuating common potential (PCF), the first conversion stage having its negative potential linked to the common potential (PCF) and the second conversion stage having its positive potential linked to the common potential (PCF), and **in that** the first auxiliary switching circuits (CAC1, CAC3) of said first and second conversion stages (CPP1, CPP2) are interconnected and the second auxiliary switching circuits (CAC2, CAC4) of said first and second conversion stages (CPP1, CPP2) are interconnected.

2. Converter structure according to claim 1, **characterised in that** each recirculation circuit includes a recirculation inductor (Lr1, Lr2, Lr3, Lr4) and a recirculation diode (Dr1, Dr2, Dr3, Dr4).

3. Converter structure according to either claim 1 or claim 2, **characterised in that** said first and second primary windings (Tr1-P, Tr2-P) are coupled and **in that** the secondary stage (ES) includes a single secondary winding and a rectifier connected to said single secondary winding, said first and second primary windings and the single secondary winding being coupled on the same core.

4. Converter structure according to claim 3, **characterised in that** the first auxiliary switching circuits (CAC1, CAC3) of the first and second conversion stages include recirculation inductors (Lr1, Lr3) coupled to one another, and **in that** the second auxiliary switching circuits (CAC2, CAC4) of the first and second conversion stages include recirculation inductors (Lr2, Lr4) coupled to one another.

5. Converter structure according to either claim 1 or claim 2, **characterised in that** the secondary stage (ES) comprises first and second secondary windings (Tr1-S, Tr2-S) and first and second rectifiers (D1, D2, D2', D1'; D3, D4, D4', D3') connected to said first and second secondary windings (Tr1-S; Tr2-S), respectively.

6. Converter structure according to claim 5, **characterised in that** said first and second secondary windings (Tr1-S, Tr2-S) are connected in series.

7. Converter structure according to any of claims 1 to 6, **characterised in that** it includes a plurality of primary stages connected in series, a plurality of secondary stages being connected in parallel to the same output device.

8. Converter structure according to claim 7, **characterised in that** the controls of said primary stages connected in series are independent.

9. Converter structure according to claim 7, **characterised in that** the controls of said primary stages connected in series are synchronised and staggered.

Fig. 1

EP 2 495 860 B1

Fig. 2a

Fig. 2b

Fig. 2c

Fig. 2d

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9001232 A1

- FR 2870057 A1

**Littérature non-brevet citée dans la description**

- **MAITI ; MONDAI ; BISWAS.** Design procedure of a push-pull current fed DC-DC converter. Dept. of Electrical Engineering, Jadavpur University, 2010